# EUROPÄISCHE PATENTSCHRIFT

(11) **EP 4 039 398 B1**
(45) Veröffentlichungstag und Bekanntmachung des Hinweises auf die Patenterteilung: **24.05.2023**
(21) Anmeldenummer: 22162410.9
(22) Anmeldetag: 16.09.2019
(51) Int. Cl.: B23K 9/167, B23K 9/12

(54) **SCHWEISSGERÄT UND SCHWEISSVERFAHREN MIT SELBSTEINSTELLENDER SCHWEISSDRAHTVORSCHUBGESCHWINDIGKEIT**
WELDING DEVICE AND METHOD FOR WELDING WITH SELF-ADJUSTING WELDING WIRE FEED SPEED
POSTE À SOUDER ET PROCÉDÉ DE SOUDAGE DONT LA VITESSE D'ALIMENTATION DU FIL D'APPORT EST RÉGLÉE AUTOMATIQUEMENT

(30) Priorität: 17.09.2018 EP 18194863
(43) Veröffentlichungstag der Anmeldung: 10.08.2022
(62) Teilanmeldung aus: 19780158.2
(73) Patentinhaber: Fronius International GmbH, 4643 Pettenbach (AT)
(72) Erfinder: Willinger, Martin, 4643 Pettenbach (AT); Artelsmair, Josef, 4643 Pettenbach (AT); Lattner, Peter, 4643 Pettenbach (AT); Kruglhuber, Wolfgang, 4643 Pettenbach (AT)
(74) Vertreter: Patentanwälte Pinter & Weiss OG

(56) Entgegenhaltungen:
- EP-A1- 2 644 306
- JP-A- S5 886 982
- JP-A- H08 309 536
- JP-A- H09 141 432

## Beschreibung

Die gegenständliche Erfindung betrifft ein Schweißverfahren, und ein Schweißgerät, mit einem Schweißbrenner mit Elektrode und einem Schweißdraht, der einer Schweißstelle mit einer Schweißdrahtvorschubgeschwindigkeit zugeführt wird, wobei zum Schweißen durch einen durch die Elektrode fließenden Schweißstrom ein Lichtbogen zwischen der Elektrode und einem zu schweißenden Werkstück aufrechterhalten wird. Ein solches Schweißverfahren bzw. Schweißgerät ist aus der Druckschrift JP H08 309536 bekannt.

Die Erfindung betrifft ein Schweißverfahren mit Elektrode. Über die Elektrode wird ein Schweißstrom geleitet, um einen Lichtbogen zwischen der Elektrode und einem zu schweißenden Werkstück aufzubauen und aufrechtzuerhalten. Der Lichtbogen schmilzt das Material des Werkstückes in einem Schmelzbad auf. Im Falle einer abschmelzenden Elektrode schmilzt dabei auch die Elektrode, wobei die abschmelzende Elektrode in bekannter Weise nachgefördert wird. Ein Schweißzusatzwerkstoff wird in Form eines Schweißdrahtes (mit an sich beliebigem Querschnitt) in den Lichtbogen bzw. das Schmelzbad gehalten, wodurch der Schweißzusatzwerkstoff ebenfalls abschmilzt und sich im Schmelzbad mit dem Werkstoff des Werkstücks verbindet. Üblicherweise wird auch ein inertes Schutzgas (üblicherweise Argon oder Helium) verwendet, um einen Kontakt der Schmelze mit der Umgebungsluft zu verhindern. Zusätzlich kann auch in den Schweißdraht ein elektrischer Heizstrom eingebracht werden, um den Schweißdraht elektrisch aufzuheizen und das Abschmelzen des Schweißzusatzwerkstoffes zu unterstützen. Ein bekanntes Schweißverfahren dieser Art ist das WIG-Schweißen (Wolfram Inertgas Schweißen), mit einer nicht-abschmelzenden Elektrode aus Wolfram oder einer Wolframlegierung, oder das MIG-Schweißen (Metall Inertgas Schweißen) oder MAG-Schweißen (Metall Aktivgas Schweißen), jeweils mit einer abschmelzenden Elektrode.

Oftmals wird der Schweißdraht der Schweißstelle bei einem solchen Schweißverfahren mit einem Drahtvorschub zugeführt. Dabei wird in der Regel in Abhängigkeit von der eingestellten Schweißstromhöhe eine konstante Drahtvorschubgeschwindigkeit eingestellt. Dabei kommt es immer wieder vor, dass der Schweißdraht zu tief in das Schmelzbad eintaucht oder dass der Schweißdraht den Kontakt zum Schmelzbad verliert und sich zu weit vom Schmelzbad entfernt. In beiden Fällen wird dadurch das Schweißergebnis verschlechtert und kann zu ungleichmäßigen Schweißnähten oder zu Fehlern in der Schweißnaht führen. Das tritt speziell bei einer händischen Führung des Schweißbrenners auf, wo der Abstand des Schweißbrenners zum Werkstück nicht exakt eingehalten werden kann. Aber auch bei robotergeführten Schweißbrennern kann das auftreten, beispielsweise beim Schweißen komplexerer Geometrien und/oder bei unterschiedlichen Schweißgeschwindigkeiten.

Um dieses Problem zu beseitigen ist aus der WO 2010/082081 A1 schon bekannt geworden, den Heizstrom durch den Schweißdraht zu nutzen, um die Änderung einer Spannung zwischen dem Schweißdraht und dem Werkstück zu detektieren. Überschreitet die Änderung der Spannung einen vorgegebenen Grenzwert, wird der Heizstrom für eine definierte Zeitspanne auf einen sehr kleinen Wert abgesenkt, um das schnelle Abschmelzen des Schweißdrahtes zu verhindern. Mit dem verbleibenden kleinen Heizstrom wird der erneute Kontakt des Schweißdrahtes mit dem Werkstück (genauer mit dem Schmelzbad) detektiert. Bei einem solchen Kontakt entsteht ein Kurzschluss, wodurch die Spannung zwischen Schweißdraht und Werkstück gegen Null absinkt. Wird erneuter Kontakt erkannt, wird der Heizstrom durch den Schweißdraht wieder erhöht. Dieses Verfahren ist damit nur für Heißdraht Anwendungen (mit Zusatzheizung des Schweißdrahtes durch einen Heizstrom) anwendbar, jedoch nicht für eine Kaltdraht Anwendung (ohne einen solchen Heizstrom). Dieses Verfahren wird aber auch nur in einem engen Bereich gut funktionieren, da die grundsätzlichen Probleme (zu tiefes Eintauchen des Schweißdrahtes in das Schmelzbad, Kontaktverlust des Schweißdrahtes zum Schmelzbad) bei falsch oder ungünstig eingestellten Schweißdrahtvorschubgeschwindigkeiten nicht sicher behoben werden können.

In der JP 60-036860 B wird das sich einstellende elektrische Potential um die Elektrode ausgewertet, um die Position des Schweißdrahtes relativ zum Werkstück zu verändern. Das elektrische Potential kann als Spannung zwischen Schweißdraht und Werkstück gemessen werden und wird verwendet, um daraus die Eintauchlage des Schweißdrahtes in das Schmelzbad abzuleiten. Damit wird die Position des Schweißdrahtes relativ zum Werkstück, konkret der Abstand des Schweißdrahtes zum Werkstück, geregelt, um eine optimale Eintauchlage einzustellen. Dieses Verfahren basiert darauf, dass immer Kontakt zwischen dem Schmelzbad und dem Schweißdraht vorhanden ist. Damit liegt aber praktisch immer ein Kurzschluss zwischen Schweißdraht und Werkstück vor und die detektierbaren Spannungen sind sehr klein und in einem sehr engen Bereich, was das Verfahren störanfällig und unzuverlässig macht. Abgesehen davon wird ein zusätzlicher Regler und Aktuator benötigt, um die Position des Schweißdrahtes relativ zum Werkstück und auch relativ zum Schweißbrenner verstellen zu können.

Es ist daher eine Aufgabe der gegenständlichen Erfindung ein Schweißverfahren, und ein entsprechendes Schweißgerät, mit einer Elektrode und einem Schweißzusatzwerkstoff in Form eines Schweißdrahtes anzugeben, mit dem auf einfache und robuste Weise die mit der Zustellung des Schweißdrahtes zum Schmelzbad verbundenen Probleme (zu tiefes Eintauchen des Schweißdrahtes in das Schmelzbad, Entfernung des Schweißdrahtes vom Schmelzbad) behoben werden können.

Diese Aufgabe wird erfindungsgemäß durch ein Verfahren nach Anspruch 1 bzw. ein Schweißgerät nach Anspruch 14 gelöst.

Über das erfasste Potential kann direkt festgestellt werden, ob der Schweißdraht das Schmelzbad kontaktiert und wie weit der Schweißdraht vom Schmelzbad entfernt ist. Damit kann das derart abgegriffene Potential verwendet werden, um die Schweißdrahtvorschubgeschwindigkeit so zu steuern, dass der Schweißdraht nicht zu tief in das Schmelzbad eintaucht und sich auch nicht zu weit vom Schmelzbad entfernt. Es muss somit die Schweißdrahtvorschubgeschwindigkeit nicht direkt gesteuert werden, sondern es wird die Lage des Schweißdrahtes zum Schmelzbad geregelt und damit indirekt die sich einstellende mittlere Schweißdrahtvorschubgeschwindigkeit.

Das wird vorteilhafterweise so gemacht, dass der Schweißdraht der Schweißstelle mit einer ersten Schweißdrahtvorschubgeschwindigkeit zugeführt wird bis über das abgegriffene Potential ein Kurzschluss zwischen Schweißdraht und Werkstück festgestellt wird, dass bei Feststellen des Kurzschlusses der Vorschub von Schweißdraht zur Schweißstelle gestoppt oder auf eine zweite Schweißdrahtvorschubgeschwindigkeit geändert wird, und dass über das abgegriffene Potential und einen vorgegebenen Grenzwert des Potentials festgestellt wird, dass der gestoppte Schweißdraht ein gewisses Maß unter Aufhebung des Kurzschlusses abgeschmolzen ist, womit die Zuführung von Schweißdraht zur Schweißstelle mit der ersten Schweißdrahtvorschubgeschwindigkeit wieder gestartet wird. Dieser Ablauf wird besonders vorteilhaft zyklisch wiederholt.

Durch die erfindungsgemäße Steuerung der Schweißdrahtvorschubgeschwindigkeit über das abgegriffene Potential stellt sich selbsttätig eine für die jeweiligen Schweißbedingungen (z.B. Schweißstrom, Lichtbogenlänge) optimale mittlere Schweißdrahtvorschubgeschwindigkeit ein, was die Zuführung von Schweißdraht erheblich vereinfacht. Gleichzeitig passt sich damit auch der Füllgrad der Schweißnaht selbsttätig an.

Vorzugsweise wird als Potential eine elektrische Spannung oder ein elektrischer Strom, oder eine damit zusammenhängende elektrische Größe, zum Bezugspotential des Werkstücks erfasst. Damit kann auf einfache Weise ein Kurzschluss erkannt werden, wenn die elektrische Spannung oder der elektrische Strom auf Null sinkt.

In einer vorteilhaften und einfachen Ausgestaltung wird das Starten des Schweißdrahtvorschubs über eine vorgegebene Grenzspannung oder einen vorgegebenen Grenzstrom als Grenzwert des Potentials gesteuert.

In einer ganz besonders vorteilhaften Ausgestaltung kann die mittlere Schweißdrahtvorschubgeschwindigkeit zum Regeln eines Abstandes zwischen der Elektrode und dem Werkstück verwendet werden. Nachdem die sich einstellende Zyklusfrequenz und die sich einstellende mittlere Schweißdrahtvorschubgeschwindigkeit vom Abstand abhängig sind, kann damit auf einfache und robuste Weise der Abstand auf einen gewünschten Wert geregelt werden. Das erfolgt vorzugsweise so, dass ausgehend von einem gewünschten Abstand der Abstand vergrößert wird, wenn die mittlere Schweißdrahtvorschubgeschwindigkeit oder die Zyklusfrequenz sinkt und der Abstand verkleinert wird, wenn die mittlere Schweißdrahtvorschubgeschwindigkeit oder die Zyklusfrequenz steigt.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 ein erfindungsgemäßes Schweißgerät mit Schweißbrenner mit nicht-abschmelzender Elektrode,
Fig.2 einen Schweißbrenner mit nicht-abschmelzender Elektrode,
Fig.3 das sich durch den Schweißstrom ausbildende Potentialfeld im/um den Lichtbogen (um die nicht-abschmelzende Elektrode),
Fig.4 die einzelnen Phasen eines erfindungsgemäßen Verfahrens zum Vorschub des Schweißdrahtes,
Fig.5 die Umsetzung des erfindungsgemäßen Verfahrens im Schweißgerät,
Fig.6 die sich einstellende Zyklusfrequenz und mittlere Schweißdrahtvorschubgeschwindigkeit bei verschiedenen Abständen zwischen der Elektrode und dem Werkstück und
Fig.7 die Erfassung der Lichtbogenspannung als Sicherheitseinrichtung.

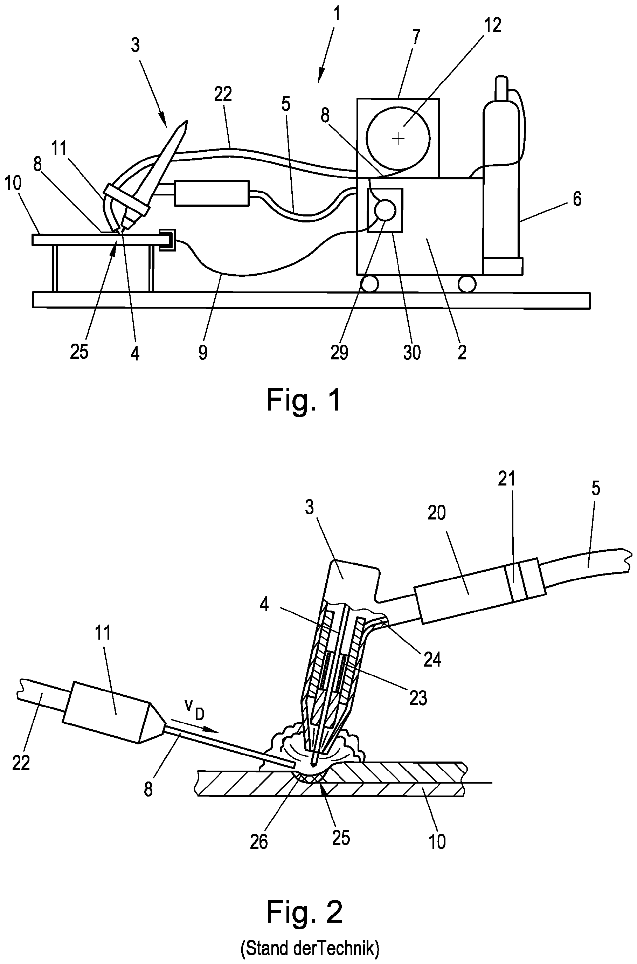

Mit Fig.1 ist ein Schweißgerät 1, beispielsweise ein WIG-Schweißgerät, dargestellt, mit einer Schweißstromquelle 2 und einem Schweißbrenner 3 mit nicht-abschmelzender Elektrode 4. Der Schweißbrenner 3 ist mittels Schlauchpaket 5 mit der Schweißstromquelle 2 verbunden. Zusätzlich ist ein Schutzgasbehälter 6 vorgesehen. Übliche Flaschenarmaturen am Schutzgasbehälter 6, beispielsweise zur Einstellung des Durchflusses von Schutzgas, sind nicht dargestellt. Ferner ist ein Schweißdrahtvorschub 7 vorgesehen, um der Schweißstelle 25 den Schweißdraht 8 als Schweißzusatzwerkstoff zuzuführen. Der Schweißdrahtvorschub 7 kann Teil der Schweißstromquelle 2 sein, kann aber auch als eigenständige Einheit ausgeführt sein. Im Schlauchpaket 5 können alle benötigten Medien, Energien und Steuersignale zum Schweißbrenner 3 übertragen werden, beispielsweise elektrische Energie (Strom, Spannung), Kühlmedium (falls der Schweißbrenner 3 gekühlt ist), Steuerleitungen zum Steuern des Schweißprozesses, Schutzgas, Schweißdraht. Üblicherweise ist als Schlauchpaket 5 ein Schlauch vorgesehen, in dem die einzelnen Leitungen und Medien geführt sind. Selbstverständlich können aber auch mehrere separate Schläuche oder Leitungen vorgesehen sein. Am zu schweißenden Werkstück 10 ist über eine Kontaktleitung 9 der elektrische Gegenpol (üblicherweise der positive Pol) kontaktiert. Am Schweißbrenner 3 kann auch noch eine Schweißdrahtzuführung 11 angeordnet sein, um den Schweißdraht 8 in einer gewünschten Lage und Richtung zur Schweißstelle 25 zuführen zu können. Die Schweißdrahtzuführung 11 kann auch mit einer Schweißdrahtleitung 22 verbunden sein, in der der Schweißdraht 8 zur Schweißdrahtzuführung 11 geführt wird. Die Schweißdrahtzuführung 11 muss aber nicht zwingend am Schweißbrenner 3 angeordnet sein, sondern kann auch an einer beliebig anderen geeigneten Stelle angeordnet sein, beispielsweise an einem Schweißroboter. Auch der Schweißdrahtvorschub 7 muss nicht zwingend an der Schweißstromquelle 2 angeordnet sein, sondern kann auch an einer beliebig anderen geeigneten Stelle angeordnet sein, beispielsweise an einem Schweißroboter. Im Schweißdrahtvorschub 7 ist eine Schweißdrahtrolle 12 angeordnet, von der der Schweißdraht 8 beim Schweißen abgerollt und der Schweißstelle mit einer Vorschubgeschwindigkeit v_{D} zugeführt wird. Hierfür ist auch ein entsprechender Antrieb für den Vorschub implementiert.

Fig.2 zeigt noch den Schweißbrenner 3 im Detail. Am Handstück 20 des Schweißbrenners 3 ist über eine Schlauchpaketkupplung 21 das Schlauchpaket 5 angeschlossen. Der Schweißdraht 8 wird hier der Schweißdrahtzuführung 11 beispielsweise über eine separate Schweißdrahtleitung 22 vom Schweißdrahtvorschub 7 zugeführt. Im Schweißbrenner 3 ist eine Kontakthülse 23 angeordnet, die die Elektrode 4 umgibt und elektrisch kontaktiert und die mit einer Schweißstromleitung 24 (üblicherweise der negative Pol) verbunden ist. Die Elektrode 4 ragt an einem Ende des Schweißbrenners 3 aus dem Schweißbrenner 3 heraus. Um die Elektrode 4 kann Schutzgas aus dem Schweißbrenner 3 austreten, das die Schweißstelle 25 mit dem Schmelzbad 26 umgibt und von der Umgebungsatmosphäre abschirmt (wie in Fig.2 angedeutet). Der Schweißdraht 8 wird der Schweißstelle 25 beim Schweißen zugeführt. Nachdem der grundsätzliche Aufbau und die grundsätzliche Funktion, und die diversen Abwandlungen hierzu, eines solchen Schweißgeräts 1 bekannt sind wird hier nicht näher darauf eingegangen.

Im Falle eines Schweißverfahrens mit abschmelzender Elektrode, beispielsweise beim MIG- oder MAG-Schweißen, gilt das obige im Wesentlichen analog, wobei die abschmelzende Elektrode in diesem Fall in bekannter Weise laufend nachgefördert wird.

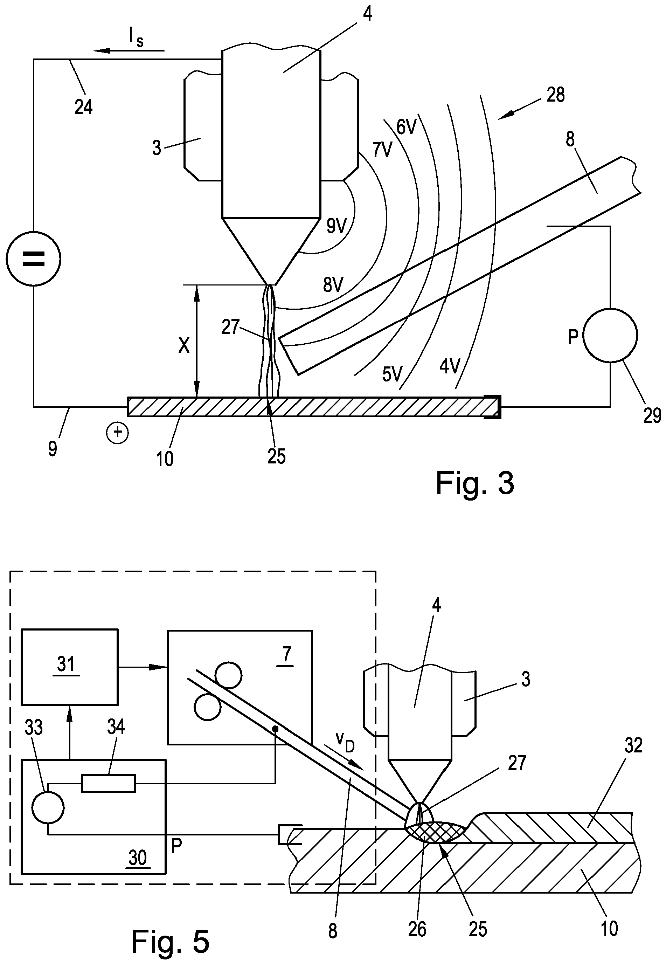

Die Erfindung nutzt den an sich bekannten Effekt, dass sich beim Fließen eines Schweißstromes Is durch die Elektrode 4 ein quasi-statisches elektrisches Feld um die Elektrode 4 ausbildet. Dieses quasi-statische elektrische Feld führt zu einer Potentialverteilung im Umfeld der Elektrode, wie in Fig.3 dargestellt. Fig.3 zeigt nur die Spitze einer nicht-abschmelzenden Elektrode 4 im Schweißbrenner 3. Durch die Elektrode 4 wird ein Schweißstrom Is (z.B. 100A) geleitet, der zu einem Lichtbogen 27 zwischen Elektrode 4 und Werkstück 10 führt bzw. einen solchen aufrechterhält. Zur Zündung des Lichtbogens 27 können bekannte Methoden angewendet werden, beispielsweise eine Hochfrequenz Zündung oder Zündung durch das Berühren des Werkstücks 10 mit der Elektrode 4 und nachfolgendes Abheben der Elektrode 4. Um die Elektrode 4 bildet sich eine Potentialverteilung aus, wie in Fig.3 durch Äquipotentiallinien 28 beispielhaft angedeutet. Die Werte sind grundsätzlich unter anderem vom Schweißstrom, Kühlung der Elektrode, Schutzgas, Lichtbogenlänge (Abstand A), usw. abhängig, können aber als bekannt vorausgesetzt werden. Dieses Potential P kann als elektrische Größe, beispielsweise eine elektrische Spannung U_{D} gegen ein Bezugspotential, abgegriffen werden. In Fig.3 sind an den Äquipotentiallinien 28 beispielhafte Spannungswerte gegen das Potential des Werkstücks 10 als Bezugspotential eingezeichnet. Dieses elektrische Potential P wird über den Schweißdraht 8, der der Schweißstelle 25 zugeführt wird und sich damit im quasi-statischen elektrischen Feld befindet, abgegriffen und mittels einer Potentialmesseinheit 30, beispielsweise ein Spannungsmessgerät 29, gegen das Bezugspotential des Werkstückes 10 gemessen. Dazu muss kein eigener Messstrom über den Schweißdraht 8 geleitet werden. Ebenso wenig stört ein möglicher Heizstrom zum Aufheizen des Schweißdrahtes 8 die Erfassung des Potentials P. Das Potential P kann damit sowohl bei Kaltdraht, als auch bei Heißdraht Anwendungen abgegriffen werden.

Es ist selbstverständlich, dass anstelle einer elektrischen Spannung U_{D} analog auch ein durch den Schweißdraht 8 fließender elektrischer Strom, der durch das Potential P hervorgerufen wird, gemessen werden kann. Hierzu kann beispielsweise zwischen dem Schweißdraht 8 und dem Werkstück 10 ein Abschlusswiderstand 34 (Fig.5) geschaltet sein, über den ein elektrischer Strom fließt, der zur Erfassung des Potentials P gemessen werden kann. In gleicher Weise kann eine andere mit der Potentialverteilung in Zusammenhang stehende elektrische Größe erfasst oder ermittelt werden, beispielsweise aus der Spannung U_{D} und dem Strom ein Widerstand oder eine Leistung. Das Abgreifen des elektrischen Potentials P umfasst daher erfindungsgemäß alle diese Möglichkeiten.

Die Erfassung des Potentials P kann beispielsweise in der Schweißstromquelle 2 durch eine Potentialmesseinheit 30 (Fig.1) erfolgen, in der das Bezugspotential des Werkstücks 10 ohnehin vorhanden ist, beispielsweise über die Kontaktleitung 9 oder einer eigenen Leitung zum Kontaktieren des Werkstücks 10. Vorteilhaft ist die Verwendung der Kontaktleitung 9, da dann auf eine zusätzliche Leitung verzichtet werden kann. Bei Verwendung der Kontaktleitung 9 kann die Potentialmesseinheit 30 beispielsweise mit dem Anschluss der Kontaktleitung 9 (Massebuchse) am Schweißgerät 1 verbunden sein. Es ist im Schweißgerät 1 lediglich zusätzlich die Potentialmesseinheit 30 vorzusehen, um eine das elektrische Potential P repräsentierende elektrische Größe, beispielsweise eine elektrische Spannung U_{D}, zu erfassen. Dazu kann einfach ein elektrischer Kontakt am Schweißdraht 8 realisiert sein, beispielsweise als Schleifkontakt im Schweißdrahtvorschub 7. Gegebenenfalls ist zwischen dem Schweißdraht 8 und dem Werkstück, oder der Kontaktleitung 9, oder einem anderen Bezugspotential, ein Abschlusswiderstand 34 vorzusehen, der auch Teil der Potentialmesseinheit 30 sein kann.

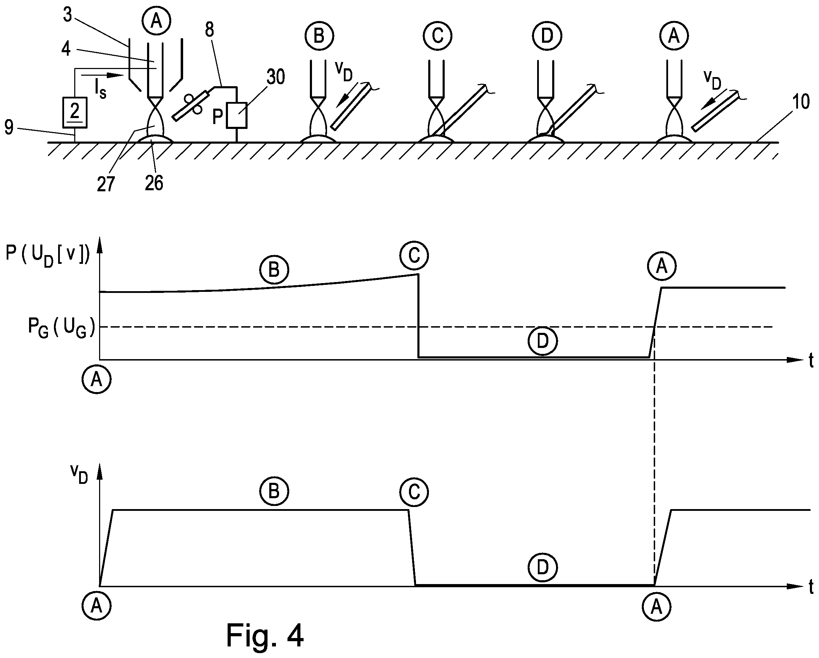

Über das erfasste Potential P kann aufgrund der sich einstellenden Potentialverteilung auf einfache Weise erkannt werden, ob der Schweißdraht 8 das Werkstück 10 (eigentlich das Schmelzbad 26) berührt oder ob der Schweißdraht 8 zu weit vom Schmelzbad 26 entfernt ist, um damit den Schweißdrahtvorschub 7 zu steuern, sodass sich eine mittlere Schweißdrahtvorschubgeschwindigkeit v̅_{D} einstellt, mit der der Schweißdraht 8 vom Schweißdrahtvorschub 7 zur Schweißstelle 25 gefördert wird. Dieses erfindungsgemäße Prinzip ist in Fig.4 anhand eines Ausführungsbeispiels dargestellt.

Fig.4 zeigt das erfindungsgemäße Verfahren anhand mehrerer Zeitpunkte und Phasen A bis D einer erfindungsgemäßen Steuerung des Schweißdrahtvorschubes 7. Im Diagramm darunter ist das abgegriffene Potential P in dieser Ausführung in Form der Spannung U_{D} über der Zeit t aufgetragen. Die Schweißdrahtvorschubgeschwindigkeit v_{D} ist im Diagramm darunter über der Zeit t dargestellt. In beiden Diagrammen sind auch die einzelnen Zeitpunkte und Phasen A - D dargestellt.

Für die Durchführung des erfindungsgemäßen Verfahrens wird laufend das Potential P erfasst, was sowohl eine kontinuierliche Erfassung, als auch eine zeitdiskrete Erfassung (Abtastung in vorgegebenen Zeitschritten) umfasst. Das gemessene Potential P wird vorzugsweise auch digitalisiert und digital verarbeitet.

Das Schweißverfahren setzt natürlich auch einen gezündeten Lichtbogen 27 voraus. Vor dem Prozessstart wird daher der Lichtbogen 27 gezündet, beispielsweise durch eine Hochspannung oder durch Berühren / Abheben der Elektrode 4. Das Ende des Schweißdrahtes 8 befindet sich dabei vorzugsweise außerhalb des Lichtbogens 27, vorzugsweise ausreichend außerhalb des Potentialfeldes um die Elektrode 4. Damit wird mit dem Schweißdraht 8 kein oder ein nur sehr kleines Potential P erfasst. Bei gezündetem Lichtbogen 27 kann dann der Schweißdrahtvorschub 7 gestartet werden, womit Schweißdraht 8 zum Lichtbogen 27 zugestellt wird. Zum Prozessstart kann daher vorgesehen sein, dass der Schweißdraht 8 zugestellt wird obwohl kein Potential P oder ein nur sehr geringes Potential P erfasst wird. Hierbei kann auch vorgesehen sein, dass zwischen Zünden des Lichtbogens 27 und dem Start des Schweißdrahtvorschubs 7 eine voreingestellte Zeit gewartet wird. Beim Zustellen des Schweißdrahtes 8 zum Lichtbogen steigt das erfasst Potential P, beispielsweise eine elektrische Spannung U_{D} oder ein Strom I_{D}, an. Überschreitet das erfasst Potential P einen vorgegebenen Grenzwert P_{G}, beispielsweise eine Grenzspannung von 2,5V im Falle einer Spannung U_{D} als Potential P, beginnt das erfindungsgemäße Verfahren, wie in Fig.4 beschrieben. Hierbei sei angemerkt, dass die Schweißdrahtvorschubgeschwindigkeit und/oder der Grenzwert P_{G} zum Prozessstart einen anderen Wert haben können, als im nachfolgend beschriebenen erfindungsgemäßen Verfahren. Ebenso sei angemerkt, dass der Prozessstart auch auf andere Weise erfolgen kann.

Es wäre auch möglich in der Potentialmesseinheit 30 eine hochohmige Spannungsquelle vorzusehen, mit der eine elektrische Spannung an den Schweißdraht 8 angelegt werden kann. Damit könnte auch vor dem Zünden des Lichtbogens 27 ein Potential P erfasst werden und daraus die Position des Schweißdrahtes 8 relativ zum Werkstück 10 bestimmt werden, insbesondere ob ein Kurzschluss (Kontakt Schweißdraht 8 mit Werkstück 10) vorliegt. Die hochohmige Spannungsquelle kann nur vor dem Schweißen mit dem Schweißdraht 8 verbunden werden, kann aber auch permanent auf den Schweißdraht 8 geschaltet sein.

Zum Zeitpunkt A erfolgt die Zuführung von Schweißdraht 8 mit einer Schweißdrahtvorschubgeschwindigkeit v_{D}, beispielsweise mit der maximalen und/oder einer vorgegebenen Schweißdrahtvorschubgeschwindigkeit, zum Schmelzbad 26. Die Zuführung des Schweißdrahtes 8 erfolgt während einer zweiten Phase B bis der Schweißdraht 8 das Werkstück 10 oder gleichwertig das Schmelzbad 26 kontaktiert (Zeitpunkt C), womit ein Kurzschluss zwischen Schweißdraht 8 und Werkstück 10 erzeugt wird. Am Zeitpunkt C sinkt die Spannung U_{D} aufgrund des Kurzschlusses auf Null. Würde als Potential P ein Strom erfasst werden, so würde auch dieser Strom auf Null sinken, weil die elektrischen Potentiale von Werkstück 10 und Schweißdraht 8 bei Kontakt dieselben sind und damit kein Strom fließen kann. Es sei an dieser Stelle angemerkt, dass die Spannung oder der Strom im Kurzschlussfall aufgrund des Widerstandes des Schmelzbades 26 und des Werkstücks 10 und des durch diese Widerstände fließenden Schweißstromes !s nicht gänzlich auf Null sinken werden, sondern dass eine kleine Restspannung (typisch im Bereich von <1V) oder ein kleiner Reststrom (typisch im Bereich von einigen µA (auch abhängig vom Abschlusswiderstand) verbleiben würde, womit ein Kurzschluss aber trotzdem eindeutig detektiert werden kann und was im Sinne der Erfindung ebenfalls als "auf Null sinken" verstanden wird.

Wird über das abgegriffene Potential P ein Kurzschluss erfasst, so wird zum Zeitpunkt C der Schweißdrahtvorschub 7 gestoppt und die Schweißdrahtvorschubgeschwindigkeit v_{D} damit auf Null gesetzt. Das Stoppen kann mit einem bestimmten vorgegebenen Geschwindigkeitsprofil erfolgen, beispielsweise mit maximal möglicher Verzögerung des Schweißdrahtvorschubes 7. Damit taucht das Schweißdrahtende des Schweißdrahtes 8 zu Beginn der Phase D ein gewisses Maß (das unter anderem vom Geschwindigkeitsprofil abhängig ist) in das Schmelzbad 26 ein. Der gestoppte Schweißdraht 8 schmilzt während der Phase D aufgrund der Wärme des Lichtbogens 27 und des Schmelzbades 26, wodurch nach einer bestimmten Zeit der Kontakt mit dem Schmelzbad 26 unterbrochen wird. Damit verliert der Schweißdraht 8 wieder den Kontakt mit dem Werkstück 10 (dem Schmelzbad 26) wodurch der Kurzschluss aufgehoben wird und das Potential P wieder rasch ansteigt. Im Falle der Spannung U_{D} wie in Fig.4 steigt die Spannung U_{D} rasch an, wenn der Schweißdraht 8 den Kontakt mit dem Schmelzbad 26 verliert. Überschreitet das ansteigende Potential P, beispielsweise die Spannung U_{D}, einen festgelegten Grenzwert P_{G}, beispielsweise eine Grenzspannung U_{G} von 2.5V, beginnt der Schweißdrahtvorschub 7 wieder Schweißdraht 8 zur Schweißstelle 25 zuzuführen (Zeitpunkt A), womit die Schweißdrahtvorschubgeschwindigkeit v_{D} wieder von Null bis zu einer eingestellten oder vorgegebenen Geschwindigkeit ansteigt. Auch das Anfahren des Schweißdrahtvorschubes 7 kann mit einem vorgegebenen Geschwindigkeitsprofil ausgeführt werden, beispielsweise mit maximal möglicher Beschleunigung des Schweißdrahtvorschubes 7. Dieser Zyklus der Phasen A - D zum Stoppen und Vorschub des Schweißdrahtes 8 wiederholt sich während der Schweißung zyklisch.

Soll der Schweißprozess beendet werden, kann am Ende der Phase D, also zum Zeitpunkt A, der Drahtvorschub nicht mehr gestartet, also der Schweißdraht 8 nicht mehr in Richtung Schmelzbad 26 gefördert werden. Der Schweißdraht 8 kann hierzu zum Zeitpunkt A auch eine bestimmte Wegstrecke rückwärtsgefördert, also von der Elektrode 4 und dem Lichtbogen 27 wegbewegt werden sodass das Drahtende durch den eventuell noch brennenden Lichtbogen 27 nicht stärker angeschmolzen wird und sich dadurch keine Kugel ausbilden kann. Der Schweißstrom Is kann dann nach einer vorgegebenen Rampe auf einen niedrigen Wert abgesenkt und abgeschaltet werden wodurch der Schweißprozess beendet ist.

Es kann im zyklischen Verlauf des Schweißprozesses auch vorgesehen sein, den Vorschub von Schweißdraht 8 bei Erkennen eines Kurzschlusses nicht sofort zu stoppen, sondern erst nach einer vorgegebenen Stopp-Verzögerungszeit. Damit kann die Eintauchtiefe des Schweißdrahtes 8 in das Schmelzbad beeinflusst werden. Hierfür kann aber auch bereits die nur endliche Verzögerung der Schweißdrahtvorschubgeschwindigkeit v_{D} auf Null ausreichend sein. Ebenso kann vorgesehen sein, den Vorschub der Schweißdrahtes 8 bei Überschreiten des Grenzwertes P_{G}, Zeitpunkt A, nicht wieder sofort zu starten, sondern erst nach einer vorgegebenen Start-Verzögerungszeit.

Gleichfalls kann vorgesehen sein, die Schweißdrahtvorschubgeschwindigkeit v_{D} zu Beginn der Phase D, also Zeitpunkt C, nicht auf Null zu reduzieren und damit den Schweißdraht 8 zu stoppen, sondern es kann in der Phase D auch eine zweite Schweißdrahtvorschubgeschwindigkeit v_{D2} eingestellt werden, die kleiner ist als die Schweißdrahtvorschubgeschwindigkeit v_{D}. Diese verbleibende Schweißdrahtvorschubgeschwindigkeit v_{D2} sollte so klein sein, dass der Schweißdraht 8 schneller abschmilzt, als dieser vorgeschoben wird. Damit würde sich die Phase D verlängern. Die zweite Schweißdrahtvorschubgeschwindigkeit v_{D2} kann aber, zumindest zeitweise, auch ein zum normalen Schweißdrahtvorschub umgekehrtes Vorzeichen aufweisen, sodass der Schweißdraht 8, vorzugsweise zu Beginn, der Phase D aktiv vom Schmelzbad 26 zurückgezogen wird. Damit würde sich die Phase D verkürzen. Dabei kann die zweite Schweißdrahtvorschubgeschwindigkeit v_{D2} auch nur für einen Teil der Phase D eingestellt werden und im restlichen Teil die Schweißdrahtvorschubgeschwindigkeit v_{D} auf Null gesetzt werden.

Dieses Verfahren könnte wie in Fig.5 dargestellt implementiert sein. Das Potential P um die Elektrode 4 des Schweißbrenners 3 wird mit dem Schweißdraht 8 abgegriffen und in einer Potentialmesseinheit 30 (Hardware und/oder Software) erfasst. Die Potentialmesseinheit 30 ist hier als Strommesseinheit 33 mit einem Abschlusswiderstand 34 ausgeführt. Das erfasste Potential P wird einer Vorschubsteuereinheit 31 (Hardware und/oder Software) zugeführt, in der das erfasste Potential P ausgewertet wird, um die einzelnen Zeitpunkte und Phasen A - D zu identifizieren. Die Potentialmesseinheit 30 und die Vorschubsteuereinheit 31 könnten natürlich auch in einer Einheit implementiert sein, beispielsweise auch in der Steuerung des Schweißgerätes 1. Die Vorschubsteuereinheit 31 steuert den Schweißdrahtvorschub 7, insbesondere wird damit die Zuführung des Schweißdrahtes 8 gestoppt (oder auf die zweite Schweißdrahtvorschubgeschwindigkeit v_{D2} geändert) und wieder gestartet wie oben beschrieben. Die Vorschubsteuereinheit 31 könnte daher auch im Schweißdrahtvorschub 7 implementiert sein. Das Stoppen und/oder Beschleunigen des Schweißdrahtes 8 kann dabei beliebig implementiert sein, beispielsweise mit größtmöglicher Dynamik (maximale Beschleunigung) oder mit einem bestimmten vorgegebenen Geschwindigkeitsprofil, wobei für das Starten und das Stoppen selbstverständliche auch unterschiedliche Beschleunigungen oder Geschwindigkeitsprofile vorgesehen sein können. Dabei können die erwähnten Verzögerungszeiten eingehalten und/oder minimal gehalten werden. Die Dynamik des Schweißdrahtvorschubes 7 sollte dabei natürlich ausreichend sein. Ein solcher Zyklus A - D dauert typischerweise 50 bis 200ms, womit die Anforderungen an die Dynamik des Schweißdrahtvorschubes 7 einfach festgelegt werden können.

Diese, oder zumindest einige, Parameter der Regelung des Schweißdrahtvorschubes 7 könnten am Schweißgerät 1 und/oder am Schweißdrahtvorschub 7 auch einstellbar sein. Hierfür kann eine geeignete Nutzerschnittstelle und/oder Ein-/Ausgabeschnittstelle vorgesehen sein.

Durch diese Art der Regelung des Schweißdrahtvorschubes 7 stellt sich in Abhängigkeit vom aktuellen Schweißstrom Is automatisch eine mittlere Schweißdrahtvorschubgeschwindigkeit v̅_{D} ein. Beziehungsweise ergibt sich die mittlere Schweißdrahtvorschubgeschwindigkeit v̅_{D} aus den Abweichungen zur eingestellten Schweißdrahtvorschubgeschwindigkeit vo. Die mittlere Schweißdrahtvorschubgeschwindigkeit v̅_{D} kann beispielsweise auch ein vorgebbarer Parameter sein, welcher die Dynamik der Regelung vorgibt. Ebenso ist die Zyklusfrequenz direkt proportional zum Schweißstrom ls. Damit muss die mittlere Schweißdrahtvorschubgeschwindigkeit v̅_{D} nicht voreingestellt und gesteuert werden, sondern es erfolgt eine selbsttätige Anpassung der mittleren Schweißdrahtvorschubgeschwindigkeit v̅_{D} an die jeweiligen Schweißbedingungen bzw. den eingestellten Schweißstrom ls. Gleichzeitig wird damit sicher verhindert, dass der Schweißdraht 8 zu tief in das Schweißbad 26 eintaucht und dass sich der Schweißdraht 8 nicht zu weit vom Schmelzbad 26 entfernt. Über die optionale Verzögerungszeit ab Zeitpunkt A kann vorgegeben werden, wie weit sich der Schweißdraht 8 vom Schmelzbad 26 entfernen darf.

Gleichzeitig passt sich damit auch der Füllgrad der Schweißnaht 32 selbsttätig an. Wird die Elektrode 4 weiter vom Werkstück 10 abgehoben, wandert die Position des Endes des Schweißdrahtes 8 näher in das heißere Lichtbogenzentrum und es wird der Draht schneller abgeschmolzen, wodurch sich die Zyklusfrequenz des Zyklus A - D erhöht. Dadurch wird der Schweißstelle 25 in Summe mehr Schweißdraht 8 zugeführt, was wiederum zu mehr Material in der Schweißnaht 32 führt. Damit kann auch verhindert werden, dass die Schweißnaht aufgrund von zu wenig Material in der Schweißnaht 32 durchsackt, was die Qualität der Schweißung negativ beeinträchtigt. Beginnt die Schweißnaht 32 durchzusacken, vergrößert sich der Abstand A der Elektrode 4 zum Werkstück 10, wodurch die Zyklusfrequenz und die mittlere Schweißdrahtvorschubgeschwindigkeit v̅_{D} ansteigt und der Schweißstelle 25 in Summe mehr Material zugeführt wird.

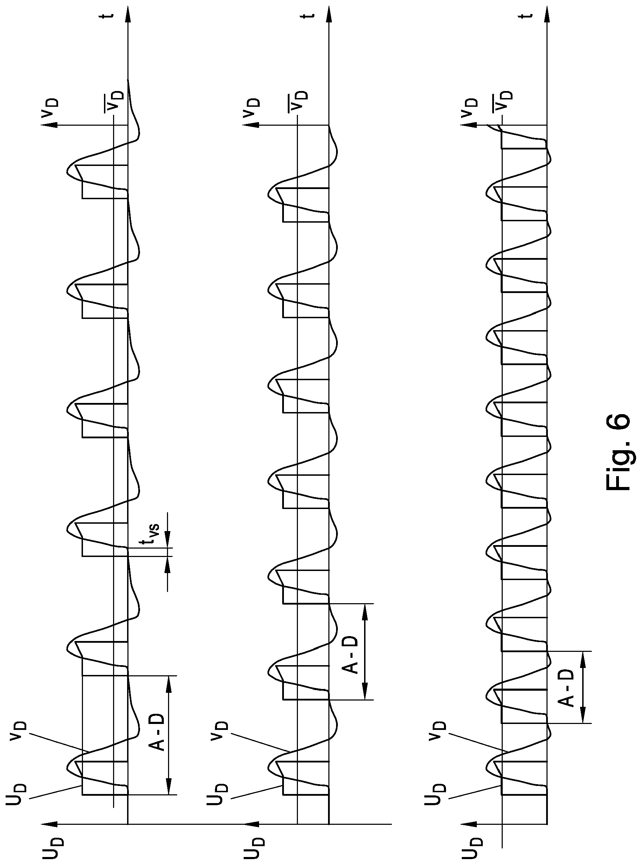

Über die sich einstellende Zyklusfrequenz und die sich einstellende mittlere Schweißdrahtvorschubgeschwindigkeit v̅_{D} kann aber auch der Abstand x der Elektrode 4 zum Werkstück 10 (Fig.3) geregelt werden. Das wird anhand der Fig.6 erläutert. Hier ist der Verlauf der Spannung U_{D} und der Schweißdrahtvorschubgeschwindigkeit v_{d} immer gleich für einen Wert des Schweißstroms Iₛ, wobei sich die Zyklusfrequenz und die mittlere Schweißdrahtvorschubgeschwindigkeit v̅_{D} direkt proportional an den Abstand x anpassen.

Fig.6 oben zeigt den sich einstellenden Zyklus A - D bei einem geringen Abstand x der Elektrode 4 vom Werkstück 10, beispielsweise 2mm. In diesem Beispiel ist das Potential P durch die Spannung U_{D} repräsentiert. Ferner erkennt man, dass in diesem Beispiel die Schweißdrahtvorschubgeschwindigkeit v_{D} in der Phase D kurz das Vorzeichen ändert, der Schweißdraht 8 also aktiv zurückgezogen wird oder aufgrund der Trägheit des Schweißdrahtvorschubs 7 und/oder der Regelung des Schweißdrahtvorschubs 7 ein gewisses Überschwingen nicht zu verhindern ist. Ebenso ist eine vorgesehene Start-Verzögerungszeit tvs zu erkennen, um den Schweißdrahtvorschub 7 verzögert zu starten. Der Zyklus A - D wiederholt sich hierbei beispielsweise mit einer Zyklusfrequenz von 11,5Hz und es stellt sich beispielsweise eine mittlere Schweißdrahtvorschubgeschwindigkeit v̅_{D} von 1m/min ein.

In der Fig.6 Mitte wurde der Abstand x der Elektrode 4 zum Werkstück 10 erhöht, beispielsweise auf 3mm. Dabei steigt die Zyklusfrequenz auf 17,2Hz an und die mittlere Schweißdrahtvorschubgeschwindigkeit v̅_{D} steigt auf 2m/min. In der Fig.6 unten wurde der Abstand x noch weiter erhöht, beispielsweise auf 4mm. Dabei steigt die Zyklusfrequenz auf 26,2Hz an und die mittlere Schweißdrahtvorschubgeschwindigkeit v̅_{D} steigt auf 2,7m/min. Die Zyklusfrequenz liegt typischerweise im Bereich zwischen 2Hz und 50Hz, wobei aber auch höhere Zyklusfrequenzen wie beispielsweise 200Hz möglich sind.

Der Abstand x kann daher ausgehend von einem eingestellten Abstand x geregelt werden, indem eine Abweichung der Zyklusfrequenz und/oder der mittleren Schweißdrahtvorschubgeschwindigkeit v̅_{D} in die eine oder andere Richtung von einer Anfangs-Zyklusfrequenz oder einer mittleren Anfangs-Schweißdrahtvorschubgeschwindigkeit zu einer Verstellung des Abstandes x in die eine oder andere Richtung, also in Richtung eines größeren Abstandes oder eines kleineren Abstandes, verändert wird. Bei einer Abweichung wird also der Abstand x verändert, sodass sich entsprechend die Zyklusfrequenz und die mittlere Schweißdrahtvorschubgeschwindigkeit v̅_{D} ändern. Daraus kann ein Signal (beispielsweise akustisch beim Handschweißen oder eine Abstandkorrektur für automatisierte Schweißanlagen) für eine Abstandregelung für den Schweißbrenner generiert werden und der Abstand x auch dokumentiert werden. Auf diese Weise kann der Abstand x während der Schweißung im Wesentlichen konstant gehalten werden, oder zumindest in einem engen Fenster um den gewünschten Abstand gehalten werden.

Es kann aber natürlich auch eine bestimmte Zyklusfrequenz oder eine bestimmte mittlere Schweißdrahtvorschubgeschwindigkeit v̅_{D} vorgegeben werden, was mit einem bestimmten Abstand x der Elektrode 4 zum Werkstück 10 korreliert, und es kann auf diesen Vorgabewert geregelt werden, womit ebenso der gewünschte Abstand x gehalten wird.

Sowohl die sich einstellende Zyklusfrequenz oder die sich einstellende mittlere Schweißdrahtvorschubgeschwindigkeit v̅_{D} kann einfach ermittelt werden, beispielswiese in der Vorschubsteuereinheit 31 oder in der Steuerung des Schweißgerätes 1, und kann daher für die Regelung des Abstandes x einfach herangezogen werden.

Zur Verstellung des Abstandes x zwischen Elektrode 4 und Werkstück 10 kann ein geeigneter aber an sich beliebiger Aktuator vorgesehen sein, der in Abhängigkeit von einer Abweichung zwischen einem gewünschten Abstand und einem aktuellen Abstand angesteuert wird, um den Abstand x zu verändern. Beispielsweise kann der Schweißbrenner 3 an einem Roboterarm angeordnet sein und die Robotersteuerung kann vom Schweißgerät 1 Information erhalten, um den Abstand x zu vergrößern oder zu verkleinern. Die Regelung des Abstandes x könnte aber auch in der Robotersteuerung selbst implementiert sein. In diesem Fall würde die Robotersteuerung beispielsweise eine aktuelle mittlere Schweißdrahtvorschubgeschwindigkeit v̅_{D} oder eine aktuelle Zyklusfrequenz vom Schweißgerät 1 erhalten.

Beim manuellen Schweißen könnte dem Schweißer beispielsweise angezeigt werden, ob der Abstand x vergrößert oder verkleinert werden sollte. Die Anzeige kann ein Display sein oder auch einfach Signalleuchten oder ein akustisches Signal.

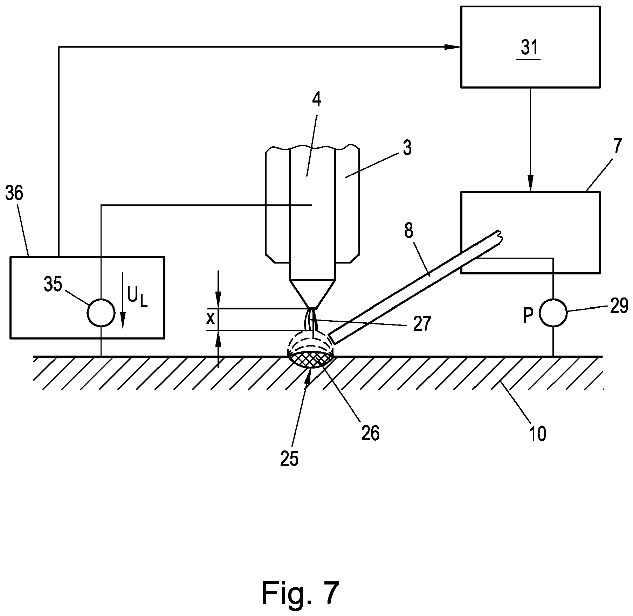

Unabhängig von einer Regelung des Abstandes x oder einer Anpassung der mittleren Schweißdrahtvorschubgeschwindigkeit v̅_{D} kann der Abstand x zwischen Elektrode 4 und Werkstück 10 an der Schweißstelle 25 überwacht werden, wie anhand der Fig.7 beschrieben wird. Wenn beispielsweise die Bewegung des Schweißbrenners 3 gestoppt wird, z.B. wegen eines Fehlers, dann würde der Schweißdraht 8 nachwievor wie beschrieben gefördert werden, solange ein Lichtbogen 27 brennt. Das würde dazu führen, dass an der Schweißstelle 25 laufend Schweißzusatzwerkstoff zugeführt wird und sich örtlich aufstaut (strichliert in Fig.7). Damit würde der Abstand x zwischen Elektrode 4 und der Schweißstelle 25 (dem Werkstück) kleiner werden, was zwar zu einer Reduzierung der mittlere Schweißdrahtvorschubgeschwindigkeit v̅_{D} führen würde, aber das Zuführen von Schweißdraht 8 nicht unterbinden würde. Im schlimmsten Fall könnte die Elektrode 4 in das Schweißbad 26 eintauchen, was die Elektrode 4 zerstören würde. Es kann daher vorgesehen sein, dass zusätzlich die Lichtbogenspannung U_{L} zwischen Elektrode 4 und dem Werkstück 10 (dem Schmelzbad 26) erfasst wird. Das kann beispielsweise durch eine einfache Spannungsmessung in der Schweißstromquelle 2 implementiert sein, z.B. mit einem Lichtbogenspannungssensor 35. Die Auswertung der erfassten Lichtbogenspannung U_{L} kann in einer Lichtbogenspannungerfassungseinheit 36 (Hardware und/oder Software) erfolgen. Die Erfassung der Lichtbogenspannung U_{L} erfolgt laufend analog oder digital, wobei unter laufend auch eine zeitlich diskrete Abtastung der Lichtbogenspannung U_{L} verstanden wird. Dabei gilt bei brennendem Lichtbogen 27, je kleiner der Abstand x, umso kleiner die Lichtbogenspannung U_{L}. Es kann damit eine untere Grenze der Lichtbogenspannung festgelegt werden, beispielsweise 8V. Wird diese untere Grenzspannung unterschritten, dann wird die Zuführung von Schweißdraht 8 gestoppt. Erst wenn die erfasste Lichtbogenspannung wieder über eine vorgegebenen Startspannung, beispielsweise 8,2V, steigt, wird die Zuführung von Schweißdraht 8 wie oben beschrieben wieder aufgenommen. Um ein ständiges Stoppen und Starten der Schweißdrahtzuführung zu unterbinden, ist die Startspannung vorzugsweise größer als die Grenzspannung. Dazu kann die Lichtbogenspannungerfassungseinheit 36 die Vorschubsteuereinheit 31 ansteuern, um den Vorschub von Schweißdraht 8 zu stoppen. Die Lichtbogenspannungerfassungseinheit 36 könnte dazu auch in der Vorschubsteuereinheit 31 implementiert sein. Die Lichtbogenspannungerfassungseinheit 36 könnte den Schweißdrahtvorschub 7 aber auch direkt ansteuern.

Um nicht bei jedem kurzfristigen Unterschreiten der Grenzspannung die Schweißdrahtzuführung zu stoppen, kann auch vorgesehen sein, dass ein gleitender Mittelwert der erfassten Lichtbogenspannung U_{L} über eine vorgegebene Zeitspanne ermittelt wird. Um die Schweißdrahtzuführung zu stoppen, müsste dann der Mittelwert unter die Grenzspannung fallen. Und zum Starten müsste vorzugsweise der Mittelwert über die Startspannung steigen.

Die Erfassung und Auswertung der Lichtbogenspannung U_{L} dient damit der Erhöhung der Prozesssicherheit.

Wenn die Kontaktleitung 9 (Masseleitung) für die Erfassung des Potentials P genutzt wird, dann kann das vorteilhaft auch dazu genutzt werden, um den Zustand der Kontaktleitung 9 laufend zu erfassen und zu überwachen. Bei Kurzschluss (Phase D, Fig.4) entspricht das erfasste Potential P (im Falle einer Spannung U_{D}) dem Spannungsabfall zwischen Werkstück 10 und der Verbindung zwischen der Potentialmesseinheit 30 und der Kontaktleitung 9 im Schweißgerät 1 (beispielsweise der Anschluss der Kontaktleitung 9 im Schweißgerät 1) und repräsentiert damit im Wesentlichen die Kontaktleitung 9. Wird nun mit der erfassten Spannung U_{D} (Potential P) und dem bekannten Schweißstrom Is ein Widerstand berechnet, beispielsweise in der Vorschubsteuereinheit 31 oder einer anderen Steuereinheit des Schweißgeräts 1, so ist dieser Widerstand ein Maß für den Zustand der Kontaktleitung 9. Wird während jeder Phase D, oder in jeder x-ten (x>1) Phase D, dieser Widerstand ermittelt, kann der Zustand der Kontaktleitung 9 überwacht werden. Steigt beispielsweise der Widerstand an, so kann auf eine Verschlechterung des Zustands der Kontaktleitung 9 geschlossen werden. Hierzu kann ein Grenzwiderstand hinterlegt sein mit dem der laufend erfasste Widerstand verglichen wird. Überschreitet der Widerstand der Grenzwiderstand, so kann eine Fehlermeldung (z.B. akustisch oder visuell) ausgegeben werden, beispielsweise am Schweißgerät 1. Selbstverständlich kann damit in gleicher Weise auch der Zustand einer separaten Leitung zwischen Werkstück und der Potentialmesseinheit 30 ermittelt und überwacht werden. Diese Überwachung des Zustands der Kontaktleitung 9 oder einer separaten Leitung ist unabhängig von der Verwendung des Potential P zur Steuerung des Schweißprozesses, insbesondere unabhängig von der Regelung der Schweißdrahtvorschubgeschwindigkeit vo.

## Patentansprüche

1. Schweißverfahren mit einem Schweißbrenner (3) mit einer Elektrode (4) und einem Schweißdraht (8), der einer Schweißstelle (25) mit einer Schweißdrahtvorschubgeschwindigkeit (v_{D}) zugeführt wird, wobei zum Schweißen durch einen durch die Elektrode (4) fließenden Schweißstrom (Is) ein Lichtbogen (27) zwischen der Elektrode (4) und einem zu schweißenden Werkstück (10) aufrechterhalten wird, **dadurch gekennzeichnet, dass** mit dem Schweißdraht (8) das durch den Schweißstrom (ls) um die Elektrode (4) entstehende elektrische Potential (P) abgegriffen wird und die Regelung der Schweißdrahtvorschubgeschwindigkeit (v_{D}) anhand des abgegriffenen Potentials (P) durchgeführt wird und sich durch die Regelung eine mittlere Schweißdrahtvorschubgeschwindigkeit (v̅_{D}) einstellt, wobei vor dem Schweißen oder permanent eine elektrische Spannung an den Schweißdraht (8) angelegt wird, mittels der vor dem Zünden des Lichtbogens (27) ein Potential (P) erfasst wird und daraus die Position des Schweißdrahtes (8) relativ zum Werkstück (10) bestimmt wird.

2. Schweißverfahren nach Anspruch 1, **dadurch gekennzeichnet, dass** der Schweißdraht (8) der Schweißstelle (25) mit einer ersten Schweißdrahtvorschubgeschwindigkeit (v_{D}) zugeführt wird bis über das abgegriffene Potential (P) ein Kurzschluss zwischen Schweißdraht (8) und Werkstück (10) festgestellt wird, **dass** bei Feststellen des Kurzschlusses der Vorschub von Schweißdraht (8) zur Schweißstellte (25) gestoppt oder auf eine zweite Schweißdrahtvorschubgeschwindigkeit (v_{D2}) geändert wird, **und dass** über das abgegriffene Potential (P) und einen vorgegebenen Grenzwert (P_{G}) des Potentials (P) festgestellt wird, dass der gestoppte Schweißdraht (8) ein gewisses Maß unter Aufhebung des Kurzschlusses abgeschmolzen ist, womit die Zuführung von Schweißdraht (8) zur Schweißstelle (25) mit der ersten Schweißdrahtvorschubgeschwindigkeit (v_{D}) wieder gestartet wird.

3. Schweißverfahren nach Anspruch 2, **dadurch gekennzeichnet, dass** das Starten und Stoppen des Vorschubes des Schweißdrahtes (8) in Abhängigkeit vom erfassten Potential (P) während dem Schweißen zyklisch wiederholt wird.

4. Schweißverfahren nach Anspruch 2, **dadurch gekennzeichnet, dass** das Starten des Vorschubes des Schweißdrahtes (8) mit einer vorgegebenen Start-Verzögerungszeit (tvs) erfolgt und/oder das Stoppen des Schweißdrahtes (8) mit einer vorgegebenen Stopp-Verzögerungszeit erfolgt.

5. Schweißverfahren nach einem der Ansprüche 1 bis 4, **dadurch gekennzeichnet, dass** als Potential (P) eine elektrische Spannung (U) oder ein elektrischer Strom (I), oder eine damit zusammenhängende elektrische Größe, zum Bezugspotential des Werkstücks (10) erfasst wird.

6. Schweißverfahren nach Anspruch 5, **dadurch gekennzeichnet, dass** ein Kurzschluss erkannt wird, wenn die elektrische Spannung (U) oder der elektrische Strom (I) auf Null sinkt.

7. Schweißverfahren nach Anspruch 6, **dadurch gekennzeichnet, dass** bei gestopptem Vorschub des Schweißdrahtes (8) durch das Abschmelzen des Schweißdrahtes (8) und damit verbundenem Kontaktverlust zwischen Schweißdraht (8) und Werkstück (10) der Wert der elektrischen Spannung (U) oder des elektrischen Stromes (I) von Null ansteigt und bei weiterem Abschmelzen des Schweißdrahtes (8) eine vorgegebene Grenzspannung (U_{G}) oder ein vorgegebener Grenzstrom (I_{G}) als Grenzwert (P_{G}) des Potentials (P) erreicht werden, womit der Vorschub des Schweißdrahtes (8) zur Schweißstelle (25) wieder gestartet wird.

8. Schweißverfahren nach einem der Ansprüche 1 bis 7, **dadurch gekennzeichnet, dass** die mittlere Schweißdrahtvorschubgeschwindigkeit (v̅_{D}) zum Regeln eines Abstandes (x) zwischen der Elektrode (4) und dem Werkstück (10) verwendet wird.

9. Schweißverfahren nach einem der Ansprüche 3 bis 7, **dadurch gekennzeichnet, dass** die Zyklusfrequenz der zyklischen Wiederholung zum Regeln eines Abstandes (x) zwischen der Elektrode (4) und dem Werkstück (10) verwendet wird.

10. Schweißverfahren nach Anspruch 8 oder 9, **dadurch gekennzeichnet, dass** ausgehend von einem gewünschten Abstand der Abstand (x) vergrößert wird, wenn die mittlere Schweißdrahtvorschubgeschwindigkeit (v̅_{D}) oder die Zyklusfrequenz sinkt und der Abstand (x) verkleinert wird, wenn die mittlere Schweißdrahtvorschubgeschwindigkeit (v̅_{D}) oder die Zyklusfrequenz steigt.

11. Schweißverfahren nach einem der Ansprüche 1 bis 10, **dadurch gekennzeichnet, dass** eine Lichtbogenspannung (U_{L}) zwischen Elektrode (4) und Schweißstelle (25) erfasst wird und die Zuführung von Schweißdraht (8) gestoppt wird, wenn die erfasste Lichtbogenspannung (U_{L}), oder ein Mittelwert der Lichtbogenspannung (U_{L}) über eine vorgegebene Zeitspanne, unter eine vorgegebene Grenzspannung fällt.

12. Schweißverfahren nach Anspruch 11, **dadurch gekennzeichnet, dass** die Zuführung von Schweißdraht (8) wieder gestartet wird, wenn die erfasste Lichtbogenspannung (U_{L}), oder ein Mittelwert der Lichtbogenspannung (U_{L}) über eine vorgegebene Zeitspanne, über eine vorgegebene Startspannung steigt.

13. Schweißverfahren nach einem der Ansprüche 1 bis 12, **dadurch gekennzeichnet, dass** während eines Kurzschlusses zwischen Schweißdraht (8) und Werkstück (10) aus dem erfassten Potential (P) und dem Schweißstrom (I_{S}) ein Widerstand als Maß für den Zustand einer Leitung zwischen einer Potentialmesseinheit (30) zur Ermittlung des Potentials (P) und dem Werkstück (10) ermittelt wird.

14. Schweißgerät mit einem Schweißbrenner (3) mit einer Elektrode (4) und einem Schweißdrahtvorschub (7) zum Zuführen von Schweißdraht (8) mit einer Schweißdrahtvorschubgeschwindigkeit (v_{D}) in den Bereich der Elektrode (4) des Schweißbrenners (3), wobei zum Schweißen durch einen Schweißstrom (Is) durch die Elektrode (4) ein Lichtbogen (27) zwischen der Elektrode (4) und einem Werkstück (10) brennt, dadurch gekennzeichet, dass eine Potentialmesseinheit (30) vorgesehen ist, die mit dem Schweißdraht (8) das durch den Schweißstrom (ls) um die Elektrode (4) entstehende elektrische Potential (P) erfasst, und dass eine Vorschubsteuereinheit (31) vorgesehen ist, die das erfasste Potential (P) auswertet und über das erfasste Potential (P) die Schweißdrahtvorschubgeschwindigkeit (v_{D}) steuert, sodass sich eine mittlere Schweißdrahtvorschubgeschwindigkeit (v̅_{D}) einstellt, wobei in der Potentialmesseinheit (30) eine hochohmige Spannungsquelle vorgesehen ist, die vor dem Schweißen oder permanent eine elektrische Spannung an den Schweißdraht (8) anlegt, wobei die Potentialmesseinheit (30) vor dem Zünden des Lichtbogens (27) ein Potential (P) erfasst und daraus die Position des Schweißdrahtes (8) relativ zum Werkstück (10) bestimmt.

15. Schweißgerät nach Anspruch 14, **dadurch gekennzeichnet, dass** die Vorschubsteuereinheit (31) über das erfasste Potential (P) einen Kurzschluss zwischen Schweißdraht (8) und Werkstück (10) feststellt, **dass** die Vorschubsteuereinheit (31) bei Feststellen eines Kurzschlusses den Vorschub von Schweißdraht (8) mit einer ersten Schweißdrahtvorschubgeschwindigkeit (v_{D}) durch den Schweißdrahtvorschub (7) stoppt oder auf eine zweite Schweißdrahtvorschubgeschwindigkeit (v_{D2}) ändert **und dass** die Vorschubsteuereinheit (31) über das abgegriffene Potential (P) und einen vorgegebenen Grenzwert (P_{G}) des Potentials (P) feststellt, dass der gestoppte Schweißdraht (8) ein gewisses Maß unter Aufhebung des Kurzschlusses abgeschmolzen ist, womit die Vorschubsteuereinheit (31) den Vorschub von Schweißdraht (8) zur Schweißstelle (25) wieder startet.

16. Schweißgerät nach Anspruch 15, **dadurch gekennzeichnet, dass** die Vorschubsteuereinheit (31) das Starten und Stoppen des Vorschubes des Schweißdrahtes (8) in Abhängigkeit vom erfassten Potential (P) während dem Schweißen zyklisch wiederholt.

17. Schweißgerät nach einem der Ansprüche 14 bis 16, **dadurch gekennzeichnet, dass** das Schweißgerät (1) einen Abstand (x) zwischen der Elektrode (4) und dem Werkstück (10) in Abhängigkeit von der mittleren Schweißdrahtvorschubgeschwindigkeit (v̅_{D}) einstellt.

18. Schweißgerät nach Anspruch 16, **dadurch gekennzeichnet, dass** das Schweißgerät (1) einen Abstand (x) zwischen der Elektrode (4) und dem Werkstück (10) in Abhängigkeit von einer Zyklusfrequenz der zyklischen Wiederholung einstellt.

19. Schweißgerät nach Anspruch 17 oder 18, **dadurch gekennzeichnet, dass** das Schweißgerät (1) ausgehend von einem gewünschten Abstand den Abstand (x) vergrößert, wenn die mittlere Schweißdrahtvorschubgeschwindigkeit (v̅_{D}) oder die Zyklusfrequenz sinkt und den Abstand (x) verkleinert, wenn die mittlere Schweißdrahtvorschubgeschwindigkeit (v̅_{D}) oder die Zyklusfrequenz steigt.

20. Schweißgerät nach einem der Ansprüche 14 bis 19 , **dadurch gekennzeichnet, dass** eine Lichtbogenspannungserfassungseinheit (36) vorgesehen ist, die eine Lichtbogenspannung (U_{L}) zwischen Elektrode (4) und Schweißstelle (25) erfasst wird und die Zuführung von Schweißdraht (8) stoppt, wenn die erfasste Lichtbogenspannung (U_{L}), oder ein Mittelwert der Lichtbogenspannung (U_{L}) über eine vorgegebene Zeitspanne, unter eine vorgegebene Grenzspannung fällt.

21. Schweißgerät nach Anspruch 20, **dadurch gekennzeichnet, dass** die Lichtbogenspannungserfassungseinheit (36) die Zuführung von Schweißdraht (8) wieder startet, wenn die erfasste Lichtbogenspannung (U_{L}), oder ein Mittelwert der Lichtbogenspannung (U_{L}) über eine vorgegebene Zeitspanne, über eine vorgegebene Startspannung steigt.

## Claims

1. Welding method using a welding torch (3) having an electrode (4) and using a welding wire (8) which is supplied to a welding point (25) at a welding wire feed speed (v_{D}), whereby, for welding, a welding current (Is) flowing through the electrode (4) causes an arc (27) to be maintained between the electrode (4) and a workpiece (10) to be welded, **characterized in that** the electrical potential (P) produced by the welding current (I_{S}) around the electrode (4) is tapped with the welding wire (8) and the control of the welding wire feed speed (v_{D}) is carried out on the basis of the tapped potential (P) and the control results in an average welding wire feed speed (v̅_{D} ) being established, wherein an electrical voltage is applied to the welding wire (8) before welding or permanently, by means of which a potential (P) is detected before the ignition of the arc (27) and therefrom the position of the welding wire (8) relative to the workpiece (10) is determined.

2. Welding method according to claim 1, **characterized in that** the welding wire (8) is supplied to the welding point (25) at a first welding wire feed speed (v_{D}) until a short circuit between the welding wire (8) and the workpiece (10) is determined via the tapped potential (P), **in that**, when the short circuit is detected, the supply of the welding wire (8) to the welding point (25) is stopped or changed to a second welding wire feed speed (v_{D2}), **and in that,** via the tapped potential (P) and a specified limit value (P_{G}) of the potential (P), it is determined that the stopped welding wire (8) has melted to a certain extent causing the elimination of the short circuit, whereby the supply of the welding wire (8) to the welding point (25) is restarted at the first welding wire feed speed (v_{D}).

3. Welding method according to claim 2, **characterized in that** the starting and stopping of the supply of the welding wire (8) on the basis of the detected potential (P) is repeated cyclically during welding.

4. Welding method according to claim 2, **characterized in that** the supply of the welding wire (8) is started with a specified start delay time (t_{VS}) and/or the welding wire (8) is stopped with a specified stop delay time.

5. Welding method according to any of claims 1 to 4, **characterized in that** an electrical voltage (U) or an electrical current (I) with respect to the reference potential of the workpiece (10), or a related electrical variable, is detected as potential (P).

6. Welding method according to claim 5, **characterized in that** a short circuit is identified when the electrical voltage (U) or electrical current (I) drops to zero.

7. Welding method according to claim 6, **characterized in that,** when the supply of the welding wire (8) is stopped the value of the electrical voltage (U) or the electrical current (I) rises from zero due to the melting of the welding wire (8) and the associated loss of contact between the welding wire (8) and the workpiece (10) and, with further melting of the welding wire (8), a specified limit voltage (U_{G}) or a specified limit current (I_{G}) as a limit value (P_{G}) of the potential (P) is reached, whereby the supply of the welding wire (8) to the welding point (25) is restarted.

8. Welding method according to any of claims 1 to 7, **characterized in that** the average welding wire feed speed (v̅_{D}) is used to control a distance (x) between the electrode (4) and the workpiece (10).

9. Welding method according to any of claims 3 to 7, **characterized in that** the cycle frequency of the cyclical repetition is used to control a distance (x) between the electrode (4) and the workpiece (10).

10. Welding method according to claim 8 or 9, **characterized in that,** starting from a desired distance, the distance (x) is increased when the average welding wire feed speed (v̅_{D}) or the cycle frequency decreases and the distance (x) is reduced when the average welding wire feed speed (v̅_{D}) or the cycle frequency increases.

11. Welding method according to any of claims 1 to 10, **characterized in that** an arc voltage (U_{L}) between the electrode (4) and the welding point (25) is detected and the supply of the welding wire (8) is stopped when the detected arc voltage (U_{L}), or an average value of the arc voltage (U_{L}) over a specified period of time, falls below a specified limit voltage.

12. Welding method according to claim 11, **characterized in that** the supply of the welding wire (8) is restarted when the detected arc voltage (U_{L}), or an average value of the arc voltage (U_{L}) over a specified period of time, rises above a specified starting voltage.

13. Welding method according to any of claims 1 to 12, **characterized in that,** during a short circuit between the welding wire (8) and the workpiece (10), a resistance is determined from the detected potential (P) and the welding current (Is) as a measure of the state of a line between a potential measuring unit (30) for determining the potential (P) and the workpiece (10).

14. Welding device comprising a welding torch (3) having an electrode (4) and further comprising a welding wire feed (7) for supplying welding wire (8) at a welding wire feed speed (v_{D}) into the region of the electrode (4) of the welding torch (3), whereby, for welding, a welding current (Is) through the electrode (4) causes an arc (27) to burn between the electrode (4) and a workpiece (10), **characterized in that** a potential measuring unit (30) is provided which detects, with the welding wire (8), the electrical potential (P) generated by the welding current (Is) around the electrode (4), and **in that** a feed control unit (31) is provided which evaluates the detected potential (P) and which controls the welding wire feed speed (v_{D}) via the detected potential (P) so that an average welding wire feed speed (v̅_{D} ) is established, wherein a high-impedance voltage source is provided in the potential measuring unit (30) which applies an electrical voltage to the welding wire (8) before welding or permanently, detects a potential (P) before the ignition of the arc (27) and determines therefrom the position of the welding wire (8) relative to the workpiece (10).

15. Welding device according to claim 14, **characterized in that** the feed control unit (31) determines a short circuit between the welding wire (8) and the workpiece (10) via the detected potential (P), **in that**, when a short circuit is detected, the feed control unit (31) stops the supply of the welding wire (8) at a first welding wire feed speed (v_{D}) by the welding wire feed (7) or changes it to a second welding wire feed speed (v_{D2}), **and in that** the feed control unit (31) determines, via the tapped potential (P) and a specified limit value (P_{G}) of the potential (P), that the stopped welding wire (8) has melted to a certain extent causing the elimination of the short circuit, whereby the feed control unit (31) restarts the supply of the welding wire (8) to the welding point (25).

16. Welding device according to claim 15, **characterized in that** the feed control unit (31) repeats the starting and stopping of the supply of the welding wire (8) on the basis of the detected potential (P) cyclically during welding.

17. Welding device according to any of claims 14 to 16, **characterized in that** the welding device (1) sets a distance (x) between the electrode (4) and the workpiece (10) on the basis of the average welding wire feed speed (v̅_{D}).

18. Welding device according to claim 16, **characterized in that** the welding device (1) sets a distance (x) between the electrode (4) and the workpiece (10) on the basis of a cycle frequency of the cyclical repetition.

19. Welding device according to claim 17 or 18, **characterized in that,** starting from a desired distance, the welding device (1) increases the distance (x) when the average welding wire feed speed (v̅_{D}) or the cycle frequency decreases and reduces the distance (x) when the average welding wire feed speed (v̅_{D}) or the cycle frequency increases.

20. Welding device according to any of claims 14 to 19, **characterized in that** an arc voltage detection unit (36) is provided which detects an arc voltage (U_{L}) between the electrode (4) and the welding point (25) and which stops the supply of the welding wire (8) when the detected arc voltage (U_{L}), or an average value of the arc voltage (U_{L}) over a specified period of time, falls below a specified limit voltage.

21. Welding device according to claim 20, **characterized in that** the arc voltage detection unit (36) restarts the supply of the welding wire (8) when the detected arc voltage (U_{L}), or an average value of the arc voltage (U_{L}) over a specified period of time, rises above a specified starting voltage.

## Revendications

1. Procédé de soudage comportant une torche de soudage (3) comportant une électrode (4) et un fil à souder (8), lequel est fourni à un point de soudage (25) à une vitesse d'avance de fil à souder (v_{D}), un arc électrique (27) étant maintenu entre l'électrode (4) et une pièce à usiner (10) à souder pour le soudage au moyen d'un courant de soudage (I_{S}) passant par l'électrode (4), **caractérisé en ce que** le potentiel (P) électrique produit autour de l'électrode (4) par le courant de soudage (I_{S}) est prélevé au moyen du fil à souder (8) et la régulation de la vitesse d'avance de fil à souder (v_{D}) est effectuée au moyen du potentiel (P) prélevé et une vitesse d'avance de fil à souder moyenne (v̅_{D}) est réglée par la régulation, une tension électrique étant appliquée au fil à souder (8) avant le soudage ou de manière permanente, au moyen de laquelle un potentiel (P) est détecté avant l'allumage de l'arc électrique (27) et la position du fil à souder (8) par rapport à la pièce à usiner (10) est déterminée à partir dudit potentiel.

2. Procédé de soudage selon la revendication 1, **caractérisé en ce que** le fil à souder (8) est fourni au point de soudage (25) à une première vitesse d'avance de fil à souder (v_{D}) jusqu'à ce qu'un court-circuit entre le fil à souder (8) et la pièce à usiner (10) soit constaté par l'intermédiaire du potentiel (P) prélevé, **en ce que**, lorsque le court-circuit est constaté, l'avance de fil à souder (8) vers le point de soudage (25) est arrêtée ou modifiée à une seconde vitesse d'avance de fil à souder (v_{D2}), **et en ce que**, par l'intermédiaire du potentiel (P) prélevé et d'une valeur limite (P_{G}) prédéfinie du potentiel (P), il est constaté que le fil à souder (8) arrêté a fondu dans une certaine mesure par la suppression du court-circuit, ce qui permet de redémarrer la fourniture de fil à souder (8) au point de soudage (25) à la première vitesse d'avance de fil à souder (v_{D}).

3. Procédé de soudage selon la revendication 2, **caractérisé en ce que** le démarrage et l'arrêt de l'avance du fil à souder (8) sont répétés de manière cyclique pendant le soudage en fonction du potentiel (P) détecté.

4. Procédé de soudage selon la revendication 2, **caractérisé en ce que** le démarrage de l'avance du fil à souder (8) est effectué avec un temps de retard de démarrage (tᵥₛ) prédéfini et/ou l'arrêt du fil à souder (8) est effectué avec un temps de retard d'arrêt prédéfini.

5. Procédé de soudage selon l'une des revendications 1 à 4,
**caractérisé en ce qu'**une tension électrique (U) ou un courant électrique (I), ou une grandeur électrique qui y est liée, est détecté(e) comme potentiel (P) par rapport au potentiel de référence de la pièce à usiner (10).

6. Procédé de soudage selon la revendication 5, **caractérisé en ce qu'**un court-circuit est décelé lorsque la tension électrique (U) ou le courant électrique (I) tombe à zéro.

7. Procédé de soudage selon la revendication 6, **caractérisé en ce que**, lorsque l'avance du fil à souder (8) est arrêtée, la valeur de la tension électrique (U) ou du courant électrique (I) augmente à partir de zéro en raison de la fusion du fil à souder (8) et de la perte de contact qui y est liée entre le fil à souder (8) et la pièce à usiner (10), et lorsque la fusion du fil à souder (8) se poursuit, une tension limite (U_{G}) prédéfinie ou un courant limite (I_{G}) prédéfini est atteint comme valeur limite (P_{G}) du potentiel (P), ce qui permet de redémarrer l'avance du fil à souder (8) vers le point de soudage (25).

8. Procédé de soudage selon l'une des revendications 1 à 7,
**caractérisé en ce que** la vitesse d'avance de fil à souder moyenne ( v̅_{D} ) est utilisée pour la régulation d'une distance (x) entre l'électrode (4) et la pièce à usiner (10).

9. Procédé de soudage selon l'une des revendications 3 à 7,
**caractérisé en ce que** la fréquence de cycle de la répétition cyclique est utilisée pour la régulation d'une distance (x) entre l'électrode (4) et la pièce à usiner (10).

10. Procédé de soudage selon la revendication 8 ou 9,
**caractérisé en ce que**, à partir d'une distance souhaitée, la distance (x) augmente lorsque la vitesse d'avance de fil à souder moyenne ( v̅_{D} ) ou la fréquence de cycle baisse et la distance (x) diminue lorsque la vitesse d'avance de fil à souder moyenne ( v̅_{D} ) ou la fréquence de cycle croît.

11. Procédé de soudage selon l'une des revendications 1 à 10,
**caractérisé en ce qu'**une tension d'arc électrique (U_{L}) est détectée entre l'électrode (4) et le point de soudage (25) et la fourniture de fil à souder (8) est arrêtée lorsque la tension d'arc électrique (U_{L}) détectée, ou une valeur moyenne de la tension d'arc électrique (U_{L}), tombe en dessous d'une tension limite prédéfinie pendant une période prédéfinie.

12. Procédé de soudage selon la revendication 11, **caractérisé en ce que** la fourniture de fil à souder (8) redémarre lorsque la tension d'arc électrique (U_{L}) détectée, ou une valeur moyenne de la tension d'arc électrique (U_{L}), croît au-delà d'une tension de démarrage prédéfinie pendant une période prédéfinie.

13. Procédé de soudage selon l'une des revendications 1 à 12,
**caractérisé en ce que,** pendant un court-circuit entre le fil à souder (8) et la pièce à usiner (10), une résistance est déterminée à partir du potentiel (P) détecté et du courant de soudage (I_{S}) comme mesure de l'état d'une ligne entre une unité de mesure de potentiel (30) permettant de déterminer le potentiel (P) et la pièce à usiner (10).

14. Appareil de soudage comportant une torche de soudage (3) comportant une électrode (4) et un dispositif d'avance de fil à souder (7) pour la fourniture de fil à souder (8) à une vitesse d'avance de fil à souder dans la zone de l'électrode (4) de la torche de soudage (3), un arc électrique (27) brûlant entre l'électrode (4) et une pièce à usiner (10) pour le soudage au moyen d'un courant de soudage (I_{S}) passant par l'électrode (4), **caractérisé en ce qu'**une unité de mesure de potentiel (30) est prévue, laquelle détecte avec le fil à souder (8) le potentiel (P) électrique produit autour de l'électrode (4) par le courant de soudage (Iₛ), **et en ce qu'**une unité de commande d'avance (31) est prévue, laquelle évalue le potentiel (P) détecté et commande la vitesse d'avance de fil à souder (v_{D}) par l'intermédiaire du potentiel (P) détecté, de telle sorte qu'une vitesse d'avance de fil à souder moyenne ( v̅_{D} ) est réglée, une source de tension à valeur ohmique élevée étant prévue dans l'unité de mesure de potentiel (30), laquelle source applique une tension électrique au fil à souder (8) avant le soudage ou de manière permanente, l'unité de mesure de potentiel (30) détectant un potentiel (P) avant l'allumage de l'arc électrique (27) et déterminant la position du fil à souder (8) par rapport à la pièce à usiner (10) à partir dudit potentiel.

15. Appareil de soudage selon la revendication 14, **caractérisé en ce que** l'unité de commande d'avance (31) constate un court-circuit entre le fil à souder (8) et la pièce à usiner (10) par l'intermédiaire du potentiel (P) détecté, **en ce que** l'unité de commande d'avance (31), lorsqu'elle constate un court-circuit, arrête l'avance de fil à souder (8) à une première vitesse d'avance de fil à souder (v_{D}) par le dispositif d'avance de fil à souder (7) ou la modifie à une seconde vitesse d'avance de fil à souder (v_{D2}) **et en ce que** l'unité de commande d'avance (31) constate, par l'intermédiaire du potentiel (P) prélevé et d'une valeur limite (P_{G}) prédéfinie du potentiel (P), que le fil à souder (8) arrêté a fondu dans une certaine mesure par la suppression du court-circuit, ce qui permet à l'unité de commande d'avance (31) de redémarrer l'avance de fil à souder (8) vers le point de soudage (25).

16. Appareil de soudage selon la revendication 15, **caractérisé en ce que** l'unité de commande d'avance (31) répète de manière cyclique le démarrage et l'arrêt de l'avance du fil à souder (8) pendant le soudage en fonction du potentiel (P) détecté.

17. Appareil de soudage selon l'une des revendications 14 à 16,
**caractérisé en ce que** l'appareil de soudage (1) règle une distance (x) entre l'électrode (4) et la pièce à usiner (10) en fonction de la vitesse d'avance de fil à souder moyenne ( v̅_{D} ).

18. Appareil de soudage selon la revendication 16, **caractérisé en ce que** l'appareil de soudage (1) règle une distance (x) entre l'électrode (4) et la pièce à usiner (10) en fonction d'une fréquence de cycle de la répétition cyclique.

19. Appareil de soudage selon la revendication 17 ou 18,
**caractérisé en ce que** l'appareil de soudage (1), à partir d'une distance souhaitée, augmente la distance (x) lorsque la vitesse d'avance de fil à souder moyenne ( v̅_{D} ) ou la fréquence de cycle baisse et diminue la distance (x) lorsque la vitesse d'avance de fil à souder moyenne ( v̅_{D} ) ou la fréquence de cycle croît.

20. Appareil de soudage selon l'une des revendications 14 à 19,
**caractérisé en ce qu'**une unité de détection de tension d'arc électrique (36) est prévue, laquelle détecte une tension d'arc électrique (U_{L}) entre l'électrode (4) et le point de soudage (25) et arrête la fourniture de fil à souder (8) lorsque la tension d'arc électrique (U_{L}) détectée, ou une valeur moyenne de la tension d'arc électrique (U_{L}), tombe en dessous d'une tension limite prédéfinie pendant une période prédéfinie.

21. Appareil de soudage selon la revendication 20, **caractérisé en ce que** l'unité de détection de tension d'arc électrique (36) redémarre la fourniture de fil à souder (8) lorsque la tension d'arc électrique (U_{L}) détectée, ou une valeur moyenne de la tension d'arc électrique (U_{L}), croît au-delà d'une tension de démarrage prédéfinie pendant une période prédéfinie.
